**Europäisches Patentamt**

**European Patent Office**

**Office européen des brevets**

(19)

(11) Numéro de publication: **0 151 064**
**B1**

(12) **FASCICULE DE BREVET EUROPEEN**

(45) Date de publication du fascicule du brevet:
22.03.89

(51) Int. Cl.⁴: **C 23 C 18/18, H 01 M 4/80**

(21) Numéro de dépôt: **85400089.0**

(22) Date de dépôt: **18.01.85**

(54) **Structure métallique poreuse, son procédé de fabrication et applications.**

(30) Priorité: **25.01.84 FR 8401110**

(43) Date de publication de la demande:
**07.08.85 Bulletin 85/32**

(45) Mention de la délivrance du brevet:
**22.03.89 Bulletin 89/12**

(84) Etats contractants désignés:
**BE CH DE GB IT LI NL SE**

(56) Documents cités:
**EP-B- 0 022 409**
**FR-A- 1 258 760**
**FR-A- 1 491 712**
**FR-A- 2 047 006**
**FR-A- 2 115 392**
**GB-A- 762 670**

(73) Titulaire: **SORAPEC Société de Recherches et d'Applications Electrochimiques, 192 rue Carnot, F-94120 Fontenay-sous-Bois (FR)**

(72) Inventeur: **Bugnet, Bernard, 13 Allée Guy de Maupassant, F-77420 Champs Sur Marne (FR)**
Inventeur: **Doniat, Denis, 3bis rue J.B. Lanoz, F-94170 Le Perreux (FR)**

(74) Mandataire: **Thibon-Littaye, Annick, Cabinet A. THIBON-LITTAYE 11 rue de l'Etang, F-78160 Marly-le-Roi (FR)**

## Description

La présente demande de brevet concerne, sous une forme générale, le domaine de la fabrication de structures métalliques poreuses.

L'invention est plus particulièrement relative au domaine de la fabrication de structures métalliques poreuses pour application à titre de supports d'électrodes au nickel ou au cadmium.

On a déjà proposé des procédés de fabrication de structures métalliques à caractère cellulaire ou fibreux utilisée dans le domaine de l'électrochimie.

Les structures en question sont de type poreux ou hautement poreux et se présentent sous forme d'un réseau à ossature tridimensionnelle qui définit une pluralité d'espaces en communication les uns avec les autres.

Ces supports poreux que l'on souhaite métalliser ou rendre conducteurs sont souvent réalisés à partir d'une matière synthétique ou artifielle poreuse rendue ensuite conductrice, par exemple par un traitement de surface chimique.

De ce fait, la structure de départ est constituée par ce support poreux, qui peut être un agglomérat de fibres ordonné ou non, par exemple un feutre ou un tissé ou une structure réticulée.

Lorsqu'on utilise une structure réticulée, et pour obtenir dès le départ une structure à pores ouverts, c'est-à-dire dans laquelle les cellules peuvent communiquer les unes avec les autres, on procède à une étape dite de désoperculation, par exemple à l'hydroxyde de sodium.

Ensuite, la structure ainsi obtenue peut, par exemple, être revêtue d'une matière conductrice ou partiellement conductrice par voie chimique ou électrochimique. Ainsi, des procédés ont proposé de déposer un métal par réduction in situ de nitrate d'argent ammoniacal.

Après cette étape, il peut être prévu, dans certains cas, un deuxième revêtement métallique déposé par voie chimique et/ou électrochimique. Ensuite, après ces deux étapes, on peut procéder à l'élimination du support d'origine et au recuit éventuel du métal.

Il a été considéré dans l'ensemble que ces procédés pouvaient présenter, au stade du développement industriel, d'importantes difficultés de mise en œuvre.

Celles-ci sont essentiellement liées à la complexité des cycles opératoires envisagés, et à la multiplicité des traitements en phase liquide réalisés successivement (étapes de désoperculation, sensibilisation, métallisations chimiques et électrochimiques) risquant d'entraîner des pollutions des bains entre eux et des défauts de reproductibilité.

On pourra se reporter pour plus de détails à la demande de brevet français FR 7 022 469 déposée le 18 juin 1970. L'homme de l'art pourra également consulter la demande de brevet FR 7 917 540, déposée au nom de la demanderesse, qui concerne des supports d'électrodes et leurs applications pour générateurs électrochimiques et qui décrit un procédé d'obtention de structures de la même catégorie que celles de l'invention, et les applications de celles-ci.

On constate que dans les procédés connus partant d'un support organique à porosité élevée en pores ouverts, la première métallisation est toujours réalisée par un dépôt chimique permettant de rendre la surface interne conductrice pour recevoir ensuite le dépôt électrochimique. A priori, un tel dépôt chimique semblait particulièrement approprié en vue de remplir la totalité des pores du support et de déposer le métal sur toute la surface de ceux-ci.

Contrairement aux connaissances antérieurement acquises, il est apparu possible, conformément à la présente invention, d'augmenter de manière importante les qualités des structures métallisées obtenues, plus spécialement leur résistance mécanique si on réalise en premier lieu, en remplacement de la métallisation chimique ou en préalable à celle-ci une première métallisation effectuée par l'un des procédés connus de revêtement sous vide qui sont plus spécialement la pulvérisation cathodique et le dépôt ionique.

On notera que ces techniques de métallisation sous vide sont connues en elles-mêmes et qu'elles ont parfois été préconisées en préalable à un dépôt électrochimique notamment par les brevets français 1 258 760 et 2 115 392. Mais il s'agissait alors uniquement de conférer une qualité de conducteur électrique à la surface extérieure d'un support lisse ou d'un support microporeux sans jamais pénétrer sensiblement à l'intérieur des pores dans une structure à pores largement ouverts ni intervenir sur les propriétés mécaniques de la structure métallisée finale. D'autre part les métaux utilisés étaient l'or, l'argent ou le palladium et non le nickel ou le cuivre.

Ainsi l'invention a pour objet un procédé de fabrication d'une structure métallique poreuse convenant comme support d'électrode au nickel ou au cadmium, à partir d'un support poreux en matériau organique à porosité élevée en pores ouverts constitué d'un feutre, d'un tissé ou d'une mousse réticulée, comprenant une première métallisation dudit support, avant une métallisation électrochimique de cuivre ou de nickel, caractérisé en ce que ladite première métallisation est réalisée sous vide par pulvérisation cathodique ou dépôt ionique.

Dans un mode de réalisation particulier le procédé comporte une étape intermédiaire de métallisation chimique de cuivre ou de nickel entre ladite première métallisation et la métallisation électrochimique. Ceci permet d'augmenter l'épaisseur de la couche métallique avant la métallisation complémentaire par voie électrochimique et d'augmenter la conductibilité du support après sa métallisation sous vide.

Les techniques de métallisation sous vide, qui n'ont été appliquées jusqu'à ce jour qu'à des surfaces planes ou sensiblement planes, sont bien connues de l'homme de l'art et abondamment décrites dans la littérature; elles ne seront donc pas explicitées ici en détail.

De même on ne décrira pas les procédés de métallisation chimique et électrochimique qui font partie de l'état de la technique.

Après la ou les étapes de métallisation, la matière constituant le support de départ peut être éliminée, par exemple par traitement thermique. Cette élimination permet un allègement de la structure, et est en outre de nature à accroître sa porosité et sa surface développée, ce qui constitue un avantage supplémentaire.

Il est possible de procéder à une ultime étape de recuit de façon usuelle, lorsque le support de base a été éliminé, afin de conférer, à la structure métallique, des qualités mécaniques améliorées.

Lorsque la structure de base qu'on utilise est du type cellulaire ou à pores, il est nécessaire, dans le cadre des principales applications envisagées, de procéder, préalablement à la phase de métallisation sous vide, à une opération dite de désoperculation, c'est-à-dire d'ouverture des pores, afin d'obtenir une structure réticulée, c'est-à-dire dans le cadre de la présente demande, à une structure de grande porosité ou à porosité ouverte dans laquelle les mailles du réseau communiquent entre elles en totalité, ou au moins dans des proportions importantes.

Lorsqu'on effectue une étape de désoperculation, on peut procéder à ce traitement à l'aide d'une solution aqueuse d'hydroxyde de sodium ou de potassium, ou tout autre agent analogue provoquant l'ouverture de la structure cellulaire.

La matière, constituant le support de base réticulé, le feutre ou le tissu, peut être naturelle ou synthétique ou minérale, notamment un polymère tel que par exemple du polyester, du polyamide, du polyuréthane, du polyéther, une résine, et dans le cas des structures fibreuses, des fibres de verre, de roche ou de carbone, des fibres naturelles, laine, coton ou autre, cette liste n'étant en aucun cas limitative.

Il va de soi que le polymère, ou tout autre matériau non conducteur utilisé, peut comprendre des charges supplémentaires rendant la structure de base conductrice, ces charges pouvant être par exemple du carbone.

On a indiqué dans la présente description que la structure de base était poreuse. On entend par cette expression que cette structure a une surface spécifique supérieure et même largement supérieure à sa surface apparente. Pour certaines applications, cette structure a une porosité supérieure à 80 %, voire supérieure à 90 %, et dans certains cas de l'ordre de 95 à 98 %.

La structure de départ se présente sous forme d'un morceau de feutre ou de tissu de forme et de dimensions quelconques. Lorsqu'il s'agit d'une structure réticulée, celle-ci peut être constituée par exemple par une mousse ou une éponge dont les pores ou cellules ont été ouverts.

Au cours de l'étape de métallisation sous vide, la structure à revêtir est montée de préférence sur un dispositif rotatif type carrousel, afin de pouvoir présenter chacune des faces de ladite structure vers la source de métal. Ce dispositif peut également posséder d'autres degrés de liberté pour permettre d'incliner le support, si cela s'avère nécessaire.

Le métal utilisé dans l'étape de métallisation sous vide peut être quelconque, généralement en tout métal ou alliage utilisable dans le cadre de cette technique, et notamment dans les procédés de pulvérisation cathodique, de diffusion gazeuse ou dépôt ionique.

On comprendra qu'aucune liste exhaustive ne puisse être donnée, mais on citera à titre d'illustration, le platine et les métaux de la mine du platine, ainsi que le nickel, le chrome, le fer, le cuivre, l'or, l'argent, l'étain, l'aluminium, le titane, le zinc... Pour ce qui concerne les alliages, on peut citer le laiton, le bronze, le monel, des alliages fer-chrome et autres, ou une combinaison de ces métaux ou alliages.

Dans le présent brevet, l'expression métal désigne également des alliages de deux ou plusieurs métaux.

On notera que, lorsque le métal utilisé lors du deuxième dépôt métallique (cuivre ou nickel pour un dépôt électrochimique) est différent du premier, l'étape de recuit peut présenter un avantage supplémentaire par rapport aux modifications connues des propriétés mécaniques du métal. Cet avantage réside dans la diffusion des métaux déposés entre eux, diffusion qui peut aboutir à la formation d'un alliage. Pour certaines applications, la formation in situ d'un tel alliage peut constituer un avantage important.

En règle générale, on arrête la métallisation sous vide lorsque le revêtement du métal, ramené à la surface apparente du support, atteint une épaisseur comprise entre environ 0,05 micron et 1 micron ou plus. Des épaisseurs de l'ordre de 1/10 de micron ont été considérées comme particulièrement appropriées.

On notera qu'un avantage impliqué par la mise en œuvre d'une étape de métallisation sous vide réside dans le fait que les matériaux, plus particulièrement les polymères utilisés pour former la structure de base, ne risquent pas d'être attaqués par des bains chimiques plus ou moins corrosifs.

Un deuxième avantage est que cette technique permet d'éviter ou de réduire les problèmes de rétention de bains de traitement dans la structure, ce qui permet de réduire ou supprimer la pollution successive des bains chimiques et électrochimiques.

Il faut souligner que, jusqu'à ce jour, les techniques de métallisation sous vide apparaissaient aux hommes de l'art comme non applicables aux structures complexes et plus particulièrement aux structures poreuses en vue de l'obtention d'un dépôt continu. L'invention a surmonté ce préjugé et a permis la réalisation d'un nouveau procédé plus performant et aboutissant à la formation de produits aux caractéristiques améliorées.

Pour réaliser le dépôt métallique sous vide, on dispose de préférence les pièces à revêtir sur un support rotatif type carrousel, plus particulièrement à deux rotations, permettant un accès dans toutes les positions et toutes les inclinaisons par la source de métal.

En fait, les structures obtenues avec le procédé selon l'invention pourront être utilisées dans toutes les applications où il est nécessaire de disposer d'une structure poreuse ou même à très haute porosité ayant en outre, des propriétés conductrices (électricité, chaleur ou son), mécaniques, chimiques ou physiques particulières correspondant à celles offertes par des produits selon l'invention.

Parmi ces nombreuses applications, on citera à titre d'illustration:

- les supports pour la réalisation d'électrodes pour accumulateurs ou piles électriques ainsi que pour les électrodes pour piles à combustible;
- les supports de catalyseurs, par exemple pour réactions chimiques industrielles, notamment dans des installations de craquage ou autres, ou pour réaction de recombinaison des gaz de moteurs à combustion interne, dans le cadre des nouvelles règlementations anti-pollution;
- isolation phonique. Dans ce cas, la structure selon l'invention peut être remplie par un matériau possédant de bonnes caractéristiques isolantes phoniques, et/ou réalisée en un métal ou alliage approprié.

Bien entendu, cette liste ne saurait être considérée comme limitative.

Les exemples suivants sont destinés à illustrer l'invention sans aucunement en limiter la portée.

Exemple 1

On utilise un élément en mousse de polyuréthane d'une épaisseur de 1,5 mm, d'une largeur de maille de 0,5 mm et d'une dimension de lanière de 40 microns.

On procède tout d'abord à une ouverture de la porosité (désoperculage) en immergeant la structure de polyuréthane dans une solution de potasse 6N à une température de 50°C, et ceci pendant 15 mn.

La structure est rincée à l'eau puis séchée.

On procède ensuite à une étape de cuivrage par pulvérisation cathodique, et ceci pendant une durée de 2 mn.

L'épaisseur de cuivre déposé, ramenée à la surface apparente de la structure revêtue, est de 0,04 micron.

On procède ensuite à un cuivrage chimique dans un bain de type usuel pendant une durée de 10 mn.

Enfin, on effectue un nickelage électrochimique dans un bain de Watt sous une intensité de 8A/dm² pendant 45 mn.

Exemple 2

On utilise un feutre en polyéther d'une épaisseur de 2 mm, le diamètre des fibres étant de 40 microns et la densité surfacique de 5 mg/cm².

On effectue un dépôt de laiton par pulvérisation cathodique en exposant le feutre pendant 5 mn.

L'épaisseur moyenne de métal, ramenée à la surface apparente est de 0,1 micron.

On effectue ensuite un cuivrage chimique dans un bain du commerce pendant une durée de 50 mn.

**Revendications**

1. Procédé de fabrication d'une structure métallique poreuse convenant comme support d'électrode au nickel ou au cadmium, à partir d'un support poreux en matériau organique à porosité élevée en pores ouverts constitué d'un feutre, d'un tissé ou d'une mousse réticulée, comprenant une première métallisation dudit support, avant une métallisation électrochimique de cuivre ou de nickel, caractérisé en ce que ladite première métallisation est réalisée sous vide par pulvérisation cathodique ou dépôt ionique.

2. Procédé selon la revendication 1, caractérisé en ce que ladite première métallisation est effectuée par pulvérisation cathodique.

3. Procédé selon la revendication 1 ou 2, caractérisé en ce qu'il comporte une étape intermédiaire de métallisation chimique de cuivre ou de nickel entre ladite première métallisation et la métallisation électrochimique.

4. Procédé selon la revendication 1, 2 ou 3, caractérisé en ce qu'il comporte une dernière étape de recuit de la structure métallisée.

5. Procédé selon l'une quelconque des revendications 1 à 4, caractérisé en ce que le support est une mousse alvéolaire ou cellulaire soumise à une étape préalable de désoperculation pour obtenir un support réticulé à porosité ouverte.

6. Procédé selon la revendication 1, 3 ou 4, caractérisé en ce que le support est une mousse de polymère synthétique qui est désoperculée et la première métallisation est effectuée par pulvérisation cathodique.

7. Procédé selon la revendication 1, 3 ou 4, caractérisé en ce que le support est un feutre de polymère synthétique et la première métallisation est effectuée par pulvérisation cathodique.

8. Procédé selon l'une quelconque des revendications 1 à 7, caractérisé en ce que ladite première métallisation est à base de cuivre.

9. Procédé selon l'une quelconque des revendications 1 à 4, caractérisé en ce que la première métallisation est effectuée pour obtenir un dépôt de cuivre ou nickel d'une épaisseur comprise entre 0,05 et 1 micron.

**Patentansprüche**

1. Verfahren zur Herstellung einer metallischporösen Struktur, geeignet als Träger von Nickel- und Cadmiumelektroden unter Verwendung eines porösen Trägers aus organischem Material mit hochgradiger Porosität aus offenen Poren, bestehend aus Filz, Gewebe oder Schaumstoff mit netzförmiger Struktur, mit einer ersten Metallisierung des genannten Trägers vor einer elektrochemischen Metallisierung durch Kupfer oder Nickel, dadurch gekennzeichnet, dass die genannte erste Metallisierung im luftleeren Raum durch kathodische Zerstäubung oder ionische Ablagerung erreicht wird.

2. Verfahren nach Anspruch 1, dadurch gekennzeichnet, dass die genannte erste Metallisierung durch kathodische Zerstäubung bewirkt wird.

3. Verfahren nach Anspruch 1 und 2, dadurch gekennzeichnet, dass es eine Zwischenetappe chemischer Metallisierung mit Kupfer oder Nikkel zwischen der genannten ersten Metallisierung und der elektrochemischen Metallisierung enthält.

4. Verfahren nach den Ansprüchen 1, 2 oder 3, dadurch gekennzeichnet, dass es eine letzte Etappe des Ausglühens der metallisierten Struktur einschliesst.

5. Verfahren nach gleich welchem der Ansprüche 1 bis 4, dadurch gekennzeichnet, dass der Träger aus waben- oder zellenförmigem Schaumstoff besteht, der einem vorherigen Endeckelungsverfahren (Abtragung) unterworfen wird, um einen netzförmigen Träger mit offener Porung zu erhalten.

6. Verfahren nach den Ansprüchen 1, 3 oder 4, dadurch gekennzeichnet, dass der Träger aus molekularverkettetem synthetischem Schaumstoff besteht, der entdeckelt und bei dem die erste Metallisierung durch kathodische Zerstäubung ausgeführt wird.

7. Verfahren nach den Ansprüchen 1, 3 oder 4, dadurch gekennzeichnet, dass der Träger aus molekularverkettetem synthetischem Filz besteht, und dass die erste Metallisierung durch kathodische Zerstäubung ausgeführt wird.

8. Verfahren nach gleich welchem der Ansprüche 1 bis 7, dadurch gekennzeichnet, dass die genannte erste Metallisierung auf der Basis von Kupfer ausgeführt wird.

9. Verfahren nach gleich welchem der Ansprüche 1 bis 4, dadurch gekennzeichnet, dass die erste Metallisierung derart durchgeführt wird, dass eine Kupfer- oder Nickelablagerung einer Stärke zwischen 0,05 und 1 Mikron erreicht wird.

**Claims**

1. A method of manufacture of a porous metallic structure suitable as a support for a nickel or cadmium electrode, from a porous support of organic material of high porosity with open pores, consisting of a felt, a fabric or a reticulated foam, comprising a first metallization of the said support before an electrochemical metallization with copper or nickel, characterized in that the said first metallization is effected in vacuo by cathode sputtering or ionic deposition.

2. A method as in Claim 1, characterized in that the said first metallization is effected by cathode sputtering.

3. A method as in Claim 1 or 2, characterized in that it includes an intermediate stage of chemical metallization with copper or nickel between the said first metallization and the electrochemical metallization.

4. A method as in Claim 1, 2 or 3, characterized in that it includes a last stage of reheating the metallized structure.

5. A method as in any one of the Claims 1 to 4, characterized in that the support is an alveolar or cellular foam subjected to a previous stage of deoperculation in order to obtain a reticulated support having open porosity.

6. A method as in Claim 1, 3 or 4, characterized in that the support is a synthetic polymer foam which is deoperculated and the first metallization is effected by cathode sputtering.

7. A method as in Claim 1, 3 or 4, characterized in that the support is a synthetic polymer felt and the first metallization is effected by cathode sputtering.

8. A method as in any one of the Claims 1 to 7, characterized in that the said first metallization is copper-based.

9. A method as in any one of the Claims 1 to 4, characterized in that the first metallization is effected in order to obtain a deposit of copper or nickel of a thickness lying between 0.05 and 1 micron.